(19) Europäisches Patentamt
European Patent Office
Office européen des brevets

(11) **EP 4 651 390 A1**

(12) **EUROPEAN PATENT APPLICATION**

(43) Date of publication:
**19.11.2025 Bulletin 2025/47**

(51) International Patent Classification (IPC):
***H04B 1/7163*** (2011.01)   ***H04B 1/7183*** (2011.01)
***G01S 11/02*** (2010.01)   ***H04L 25/02*** (2006.01)

(21) Application number: **24175963.8**

(22) Date of filing: **15.05.2024**

(52) Cooperative Patent Classification (CPC):
**H04B 1/71637; G01S 7/40; G01S 11/02;**
**H04B 1/7183; H04L 25/0212;** G01S 13/765;
H04B 2201/71634

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Wang, Junge**
**Irvine, 92618 (US)**
• **Chang, Wei-Ting**
**Irvine, 92618 (US)**

(74) Representative: **Krott, Michel**
**NXP B.V.**
**Intellectual Property & Licensing**
**High Tech Campus 60**
**5656 AG Eindhoven (NL)**

(54) **METHOD OF COMPENSATING A CLOCK OFFSET BETWEEN DEVICES IN A UWB-MMS RANGING PROCESS**

(57) A low complexity clock drift estimation scheme for UWB-MMS ranging is proposed, assuming sampling frequency offset (SFO) and carrier frequency offset (CFO) are driven from the same clock source. SFO is first estimated with the multiple CIR fragments, and it is used to compensate the CFO for the CIR fragments. Then a fine CFO estimate is obtained from the compensated CIRs. Combining the coarse SFO and fine CFO estimate to resample and phase rotate the original CIRs can significantly improve the performance for CIR combining, thus, improve the performance for ranging.

Obtain the windowed CIR from each fragment — 100

Interpolate the CIR and get the CIR peak for each fragment — 101

Remove CIR peak outliers — 102

Estimate the sfo_{ppm} from the CIR peaks — 103

Compensate the cfo with the estimate sfo_{ppm} — 104

Estimate residual cfo_{ppm} — 105

The clock offset f=sfo_{ppm}+cfo_{ppm} Resample and phase synchronize the CIR fragments — 106

CIR combining — 107

Fig. 6

**Description**

TECHNICAL FIELD

The present disclosure relates to a method of compensating a clock offset between devices in a UWB MMS ranging process. The present disclosure further relates to UWB devices configured to perform the proposed method. The present disclosure furthermore relates to a computer implemented method.

BACKGROUND

To overcome regulatory power limitations and extend a coverage range for ultra-wideband (UWB), multi-millisecond ranging is proposed in the recent IEEE802.15.4ab standard. However, the channel impulse response (CIR) combining that is used to increase the signal-to-noise (SNR) ratio in the multi-millisecond scheme faces the challenges from the clock offset impairments between the two devices, due to the fact that the ranging fragments are separated by the millisecond level. On the one hand, the sampling frequency offset (SFO) will cause the CIR smearing for the ranging fragments that are separated by 1ms. On the other hand, carrier frequency offset (CFO) will cause the phase wrapping for the fragment, which needs to be compensated to integrate the inter-fragment CIR coherently.

US 2022/0137177 A1 discloses techniques for utilizing a hybrid of ultrawideband (UWB) and narrowband (NB) signaling to extend operating ranging distance.

US 8,085,876 B2 discloses apparatus and method for sampling frequency offset and carrier frequency offset estimation and correction in a communication system.

SUMMARY

A first aspect of the present disclosure is directed to a method of compensating a clock offset between devices in a UWB MMS ranging process, comprising the steps:

- determining CIR fragments as a result of ranging fragments of the MMS ranging process;
- applying a specified interpolation to the CIR fragments;
- determining a sampling frequency offset, SFO between a first UWB device and a second UWB device out of the interpolated CIR fragments;
- compensating a carrier frequency offset, CFO by means of the determined sampling frequency offset, SFO;
- determining a residual estimation of the carrier frequency offset, CFO;
- determining the clock offset by means of the estimated sampling frequency offset, SFO and the carrier frequency offset, CFO; and
- compensating the clock offset to obtain fine CIR fragments; and
- combining the fine CIR fragments to channel impulse responses, CIRs.

In this way, a low complexity clock drift compensation scheme for an UWB-MMS ranging process is provided. Assuming sampling frequency offset (SFO) and carrier frequency offset (CFO) are driven from the same clock source. SFO is first estimated with the multiple CIR fragments and used to compensate the CFO for the CIR fragments. Then the fine CFO estimate is obtained from the compensated CIR. Combining the coarse SFO and fine CFO estimates to resample and phase rotate the original CIR fragments can significantly improve the performance of CIR combining. The proposed method is suitable for MMS ranging processes in which clock differences of devices involved in these MMS ranging processes can be compensated. As a result an advanced ranging performance can be provided.

A second aspect of the disclosure is directed to a UWB device, configured to perform the proposed method.

A third aspect of the disclosure is directed to a computer-implemented method comprising executable instructions which, when executed by a UWB device cause said UWB device to carry out the proposed method.

In one or more embodiments, in step b), a linear relationship between CIR peak locations is used to estimate the sampling frequency offset, SFO.

In one or more embodiments, the sampling frequency offset, SFO is related to the peaks of the channel impulse responses, CIRs.

In one or more embodiments, the sampling frequency offset is determined from up-sampled channel impulse responses, CIRs. For example, this can be done by an upsampling from 1 GHz to 32 GHz.

In one or more embodiments, the estimated sampling frequency offset, SFO is obtained by the following equation:

$$f_{\{SFOest,\ ppm\}} = slope(CIR\ peak\ locations)/L$$

where L is the interpolation factor (e.g., L=32 when upsampling from 1GHz to 32GHz).

In one or more embodiments a slope of the channel impulse response, CIR peak locations is determined by linear regression or differential approach.

In one or more embodiments, in a case that one peak location of a CIR fragment is specified far away from a peak location of another CIR fragment, it is removed from the slope calculation. In this optional step, an outlier remover is used to increase accuracy.

In one or more embodiments, in step e) the residual carrier frequency offset, CFO is estimated with the compensated CIR peaks, wherein phase unwrapping and differentiation approach is used. Phase unwrapping is necessary because phase wrapping could happen across N > 2 fragments.

In one or more embodiments, in step f) the overall clock offset is determined as a sum of the estimated sampling frequency offset, SFO and the estimated carrier frequency offset, CFO.

BRIEF DESCRIPTION OF DRAWINGS

The above discussion/summary is not intended to describe each embodiment or every implementation of the present disclosure, the drawings and detailed description that follow also exemplify various embodiments. The aspects defined above and further aspects of the present disclosure are apparent from the examples of embodiment to be described hereinafter with reference to the appended drawings, which are explained with reference to the examples of embodiment. However, the disclosure is not limited to the examples of embodiment.

All illustrations in the drawings are schematical. In different figures, similar or identical elements or features are provided with the same reference signs or reference signs that are different from the corresponding reference signs only within the first digit. In order to avoid unnecessary repetitions, elements or features that have already been elucidated with respect to a previously described embodiment are not elucidated again at a later position in the description.

Various example embodiments may be more completely understood in consideration of the following detailed description in connection with the accompanying drawings, in which:

FIG. 1　shows a non MMS ranging frame and an MMS ranging frame in an UWB ranging process;

FIG. 2　shows an MMS ranging frame diagram;

FIG. 3　is a diagram illustrating a CIR smearing on CIR peak locations due to a clock drift between two UWB devices;

FIG. 4　is a diagram showing combined CIR fragments without compensation;

FIG. 5　is a block diagram of a conventional multi-branch search algorithm for compensation a clock drift between two UWB devices;

FIG. 6　is a flow diagram of the proposed method;

FIG. 7　is a diagram showing phases of CIR peaks before stage 1 compensation;

FIG. 8　is a diagram showing a phase of CIR peaks after stage 1 compensation;

FIG. 9　is a block diagram for the proposed two stage clock drift compensation process;

FIG. 10　is a diagram showing individual CIR fragments after compensation; and

FIG. 11　is a diagram with combined CIR fragments after compensation.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application, is only by way of illustration and not limitation.

DESCRIPTION OF EMBODIMENTS

Aspects of the present disclosure are believed to be applicable to a variety of different types of devices, apparatuses, systems, and methods. While not necessarily so limited, various aspects may be appreciated through the following discussion of non-limiting examples which use exemplary contexts.

In the following description various specific details are set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference signs may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

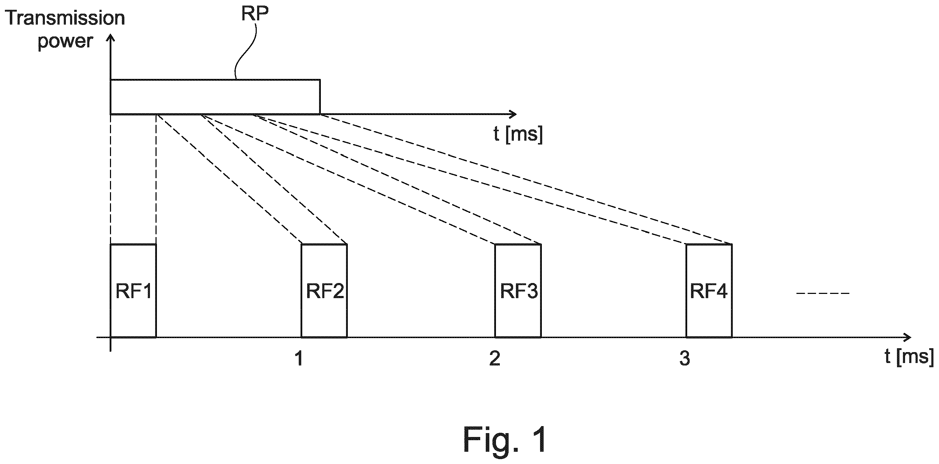

The regulatory limit on the average power for the UWB devices is -41.3dBm/MHz, measured in 1ms. Multi-millisecond ranging (MMS ranging) overcomes this limitation by spreading the transmission across multiple milliseconds, as principally shown in FIG. 1. One recognizes in the upper portion of FIG. 1 a single (non-MMs) ranging frame RP and several MMS ranging fragments RF1...RF4 in the lower portion of FIG. 1. The MMS ranging fragments RF1...RF4 are much shorter than the ranging frame RP and can thus be transmitted with higher transmission power than the non-MMS ranging frame RP. A central idea behind MMS ranging is thus to split the single ranging frame RP into multiple smaller and shorter ranging fragments, which can be transmitted with higher transmission power which improves a ranging performance. Each of the MMS ranging fragments can use the -41.3dBm/MHz average power.

The present disclosure deals with a usage of a timing frequency estimation to obtain a refined clock offset. An assumption is that the carrier and symbol clocks come from the same reference, such that the following equation applies:

$$\mathrm{SFO}_{ppm} = \mathrm{CFO}_{ppm} \qquad (1)$$

$\mathrm{SFO}_{ppm}$    sampling frequency offset (in ppm) between two UWB devices
$\mathrm{CFO}_{ppm}$    carrier frequency offset (in ppm) between two UWB devices

This is commonly used in practical system implementations. The proposed timing frequency estimation algorithm has very low complexity compared to conventional the multi-branch brute-force searching and is quite robust at very low SNR regime. The basic procedure of the proposed algorithm is as follows:

1) Interpolate the CIR for each CIR-fragment, then estimate the SFO from the up-sampled CIR peak, outlier remover could optionally be used to reduce the estimation inaccuracy and increase the robustness of the algorithm

2) Since CFO = SFO, compensating the CFO for the CIR fragments according to the SFO estimate

3) Estimate the residual CFO from the compensated CIR fragment peaks

4) The overall clock offset difference is the sum of coarse SFO estimate from step 1 and fine CFO estimate from step 3

5) Combine the CIR fragment with the timing (resampling) and frequency compensation (phase rotation)

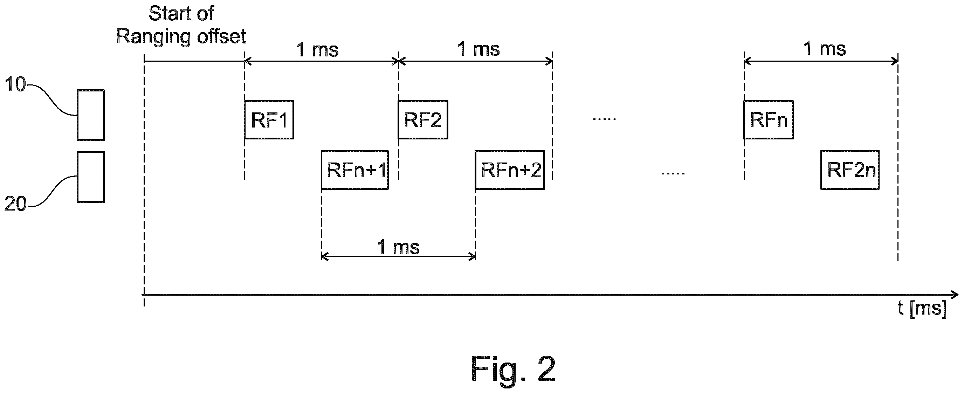

With the elaborated duty-cycling approach, the transmission power for each MMS ranging fragment RF1...RFn can be elevated, thereby increasing the SNR and extending a ranging distance between UWB devices 10, 20. In the specific ranging session scenario of FIG. 2 the MMS ranging fragments RF1...RF4 are split between a first UWB device 10 acting as an initiator and a second UWB device 20 acting as a responder in a two-way ranging process in order to determine a distance between the two UWB devices 10, 20. One recognizes, that the first UWB device 10 transmits MMS ranging fragments RF1, RF2 and the second UWB device transmits MMS ranging fragments RF3, RF4.

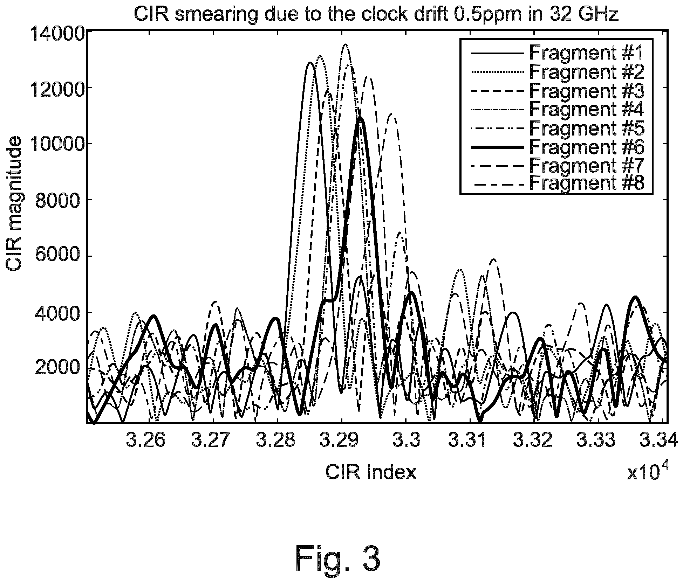

A diagram for the multi-millisecond approach is shown in FIG. 2 with MMS ranging fragments RF1...RFn. The ranging fragments RF1...RFn are sent at intervals of 1 ms by each UWB device 10, 20, so that the power transmission can be increased, as principally shown in FIG. 1. The MMS ranging fragments RF1...RFn can be implemented e.g. as ranging sequence fragments (RSF) and/or as ranging integrity fragments (RIF). The second UWB device 20 acting as a responder performs a cross correlation with a know sequence to get one channel impulse response (CIR) fragment, which are shown as single curves in FIG. 3. Scenarios with one-way ranging are not shown in Figures.

The MMS ranging frames RSF contain the synchronization symbols while the ranging frame RIF contain the scrambled timestamp sequence (STS) that increases the integrity of ranging measurements.

However, since the ranging fragments RF1...RFn are separated by 1ms, even a small clock offset between the two communicating UWB 10, 20 devices can bring challenge to the CIR combining. Specifically, two impairments can be observed:

 1. CIR smearing where the peak of the CIR from a ranging fragments shifts to one side of that of the previous ranging fragments with an unknown offset

 2. Phase wrapping where the phase at each CIR peak from each CIR fragment will be a wrapped version of the actual phase

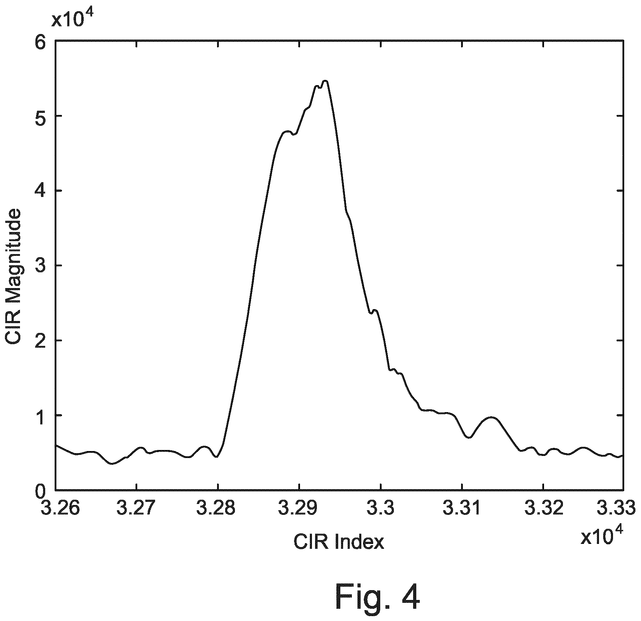

For example, assuming that a clock offset between the first UWB device 10 acting as initiator and the second UWB device 20 acting as responder is 0.5ppm. FIG. 3 shows a diagram as a result of a cross correlation performed by the second UWB device 20 with eight ranging fragments RF1...RF8, wherein one CIR results from one ranging fragment RF1...RF8, wherein the second UWB device 20 acting as responder gets eight ranging fragments. In this case, it can be seen in FIG. 3 that the peak of CIR fragment#2 has an offset from the peak of CIR fragment #1. Similarly, the peak of CIR fragment#3 has an offset from the peak of CIR fragment#2, and so on. As a result, combining CIRs as-are of FIG. 3 will cause a ranging inaccuracy as shown in FIG. 4 without well-defined peaks, which may result in bad ranging efficiency.

In addition, a phase offset between the CIRs caused by CFO will also degrade the performance of the CIR combination. Due to the MMS ranging fragment separation of 1ms, very small CFO is crucial in order not to have phase wrapping between the CIR fragments. Phase wrapping is a result of the modular function between zero degree and $2\pi$. For example, the CFO should be:

$$2\pi * f_{\{CFO\}} * T_{\{1ms\}} \leq \pi \qquad (2)$$

$$\rightarrow f_{\{CFO\}} \leq 500Hz$$

The equation (2) expresses that a CFO of $\leq 500$ Hz would be tolerable. With a carrier frequency of 8GHz, which is the carrier frequency at UWB channel 9 defined in IEEE802.15.4, this corresponds to a CFO that should be smaller than 0.0625ppm. However, this is hard to achieve in a practical system implementation, therefore, post-processing is required to estimate the clock offset and compensate for it.

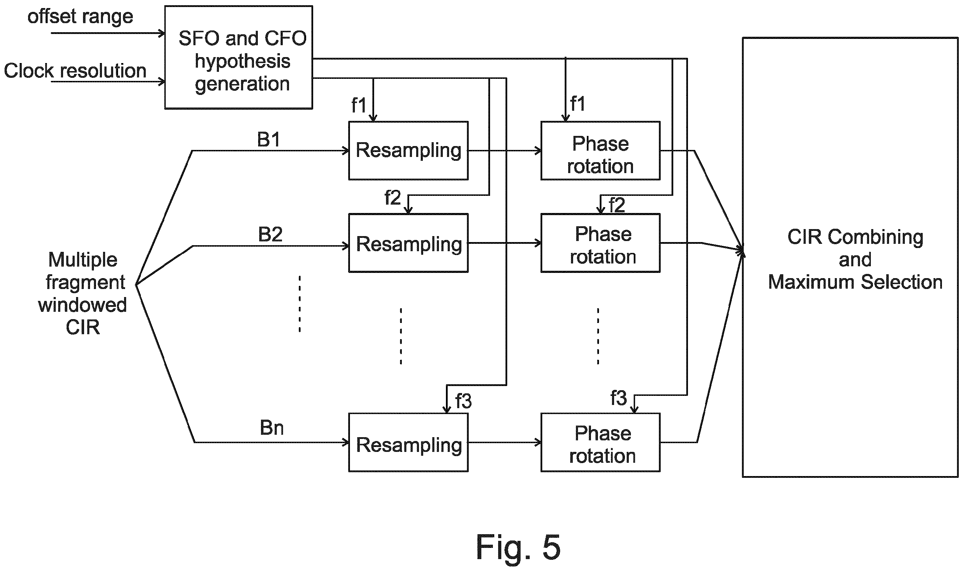

A conventional method for an estimation of the clock offset would be to use multi-branch brute-force searching to find the best SFO/CFO values to achieve the CIR combining, as principally illustrated in the block diagram of FIG. 5. It can be seen, that an estimation accuracy depends on the number of branches B1...Bn. Increasing the number of branches B1...Bn may drastically increase a complexity of the whole system, which is undesirable in system implementations. All in all, the conventional block diagram of FIG. 5 implements a rather complex algorithm with multiple branches B1...Bn, wherein an accuracy of the conventional algorithm implemented in this way depends on the number of said branches B1...Bn. Different SFO and CFO are tried to see which give the best results with respect to compensation. If it is intended to guess more knowledge, more branches B1...Bn need to be created. Each branch B1...Bn gets specific values of SFO and CFO and it is checked, which branch B1...Bn gives the best result. In this way, the conventional method implements a maximum-likelihood procedure.

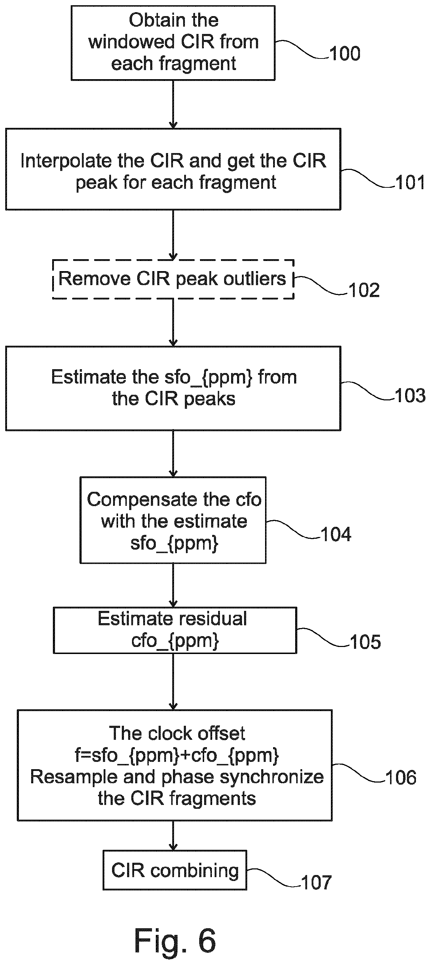

In contrast, the present disclosure proposes a low complexity two-stage timing frequency estimation approach to estimate the clock offset, which can significantly reduce the implementation complexity while keeping great performance. A flowchart of the proposed method is shown in Fig. 6.

At a first step 100 windowed channel impulse responses (CIRs) are obtained from each ranging fragments RF1...RFn. In a step 101, the CIRs are interpolated and the peak of each CIR fragment is obtained as a result of each ranging fragment. It is intended to estimate the SFO from the up-sampled CIR (e.g., from 1GHz to 32GHz). Since ideally the CIR peak for each fragment is offset according to the SFO value, SFO can be estimated according to peak locations of the CIRs. In a step 103, the SFO estimation can thus be obtained by the following equation:

$$f_{\{SFOest, \ ppm\}} = slope(CIR \ peak \ location)/L \qquad (3)$$

where L is the interpolation factor. The slope of the CIR peak locations can be computed by linear regression or by differential approach. Alternatively, in an optional step 102 outlier remover is used to increase the accuracy for the slope calculation. In this context, intuitively speaking, if one CIR peak location is far from others, it may be removed from the slope calculation. This makes use of the prior information that the clock offset is constant during the MMS transmission.

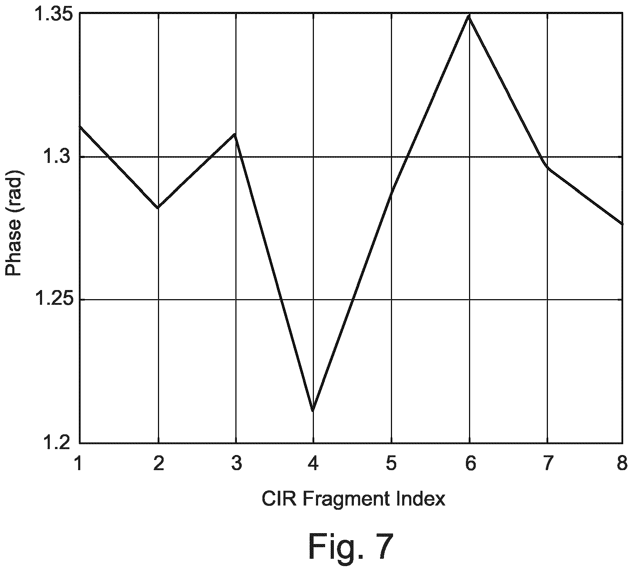

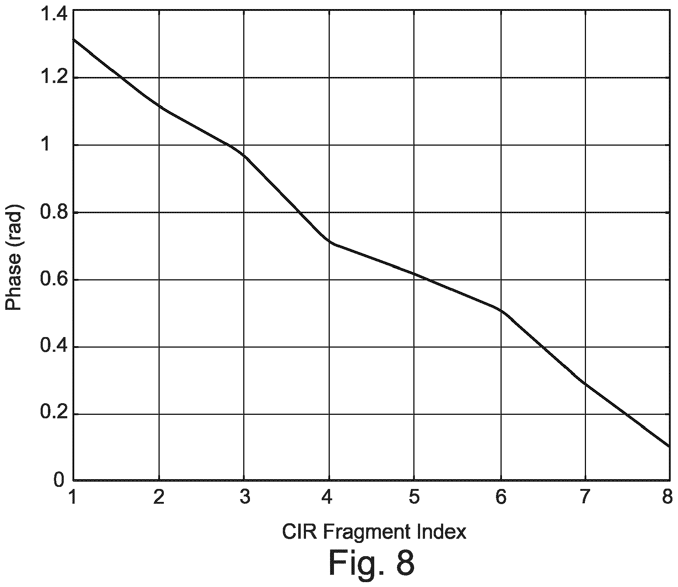

Next, in step 104, since it is assumed that CFO = SFO, the CIRs for each fragment are phase compensated by means of the estimated SFO values, such that the residual CFO range is reduced and the phase difference between two fragments RF1...RFn caused by residual CFO will be smaller than π. Phases of CIR peaks before and after CFO compensation of step 104 are shown in Figures 7 and 8.

The above illustrated steps 100 to 104 represent a first stage ST1 of the proposed method. The remaining steps 105 to 107 represent a second stage ST2 of the proposed method.

The second stage ST2 starts with a step 105, wherein a fine CFO can be estimated with the compensated CIR peaks. In this context, e.g. phase unwrapping and differentiation approach could be used. Phase unwrapping is necessary because phase wrapping could happen across N > 2 fragments. With the phase unwrapping, the fine CFO value can be estimated with the phase differentiations in the following way:

$$f_{\{CFOest,\ ppm\}} = \frac{10^6}{2\pi(N-D)Df_cT_{\{1ms\}}}\sum_{n=1}^{N-D}(ph_{n+D} - ph_n) \quad (4)$$

D        delay spacing between nth and n+Dth fragments

$ph_n$    unwrapped phase of the $n^{th}$ CIR peak after compensation

N        number of fragments

$f_c$      carrier frequency

where the delay D is configurable and can be optimized, according to a trade-off between SNR and estimation accuracy. The delay D is determined by the residual phase wrapping.

Then, in a step 106 the overall clock offset (CO) estimate is determined as a summation of the coarse estimate and the fine CFO estimate:

$$f_{\{co,ppm\}} = f_{\{SFOest,\ ppm\}} + f_{\{CFOest,\ ppm\}} \quad (5)$$

with which the CIR fragments can be re-sampled and phase synchronized. Lastly, in step 107, the fine CIR fragments can be coherently combined, in order to start a ranging process with eliminated clock offset on the UWB devices 10, 20. In this context it should be noted, that the proposed method also works with a one way ranging process between the UWB devices 10, 20.

FIG. 7 shows phases of CIR peaks before the CFO compensation of the first stage ST1. One recognizes, that a curve of phases at each CIR fragment index is not straight due to clock drift. Significant phase wrapping can be seen as an effect of splitting the ranging fragments RF1...Rfn in 1ms separation.

FIG. 8 shows an essential linear curve of phases of CIR peaks after the first stage ST1 CFO compensation. The linear curve is a result of an accumulation of residual CFO. One recognizes, that phase wrapping has essentially been attenuated due to the compensation of the clock drifts between the UWB devices 10, 20.

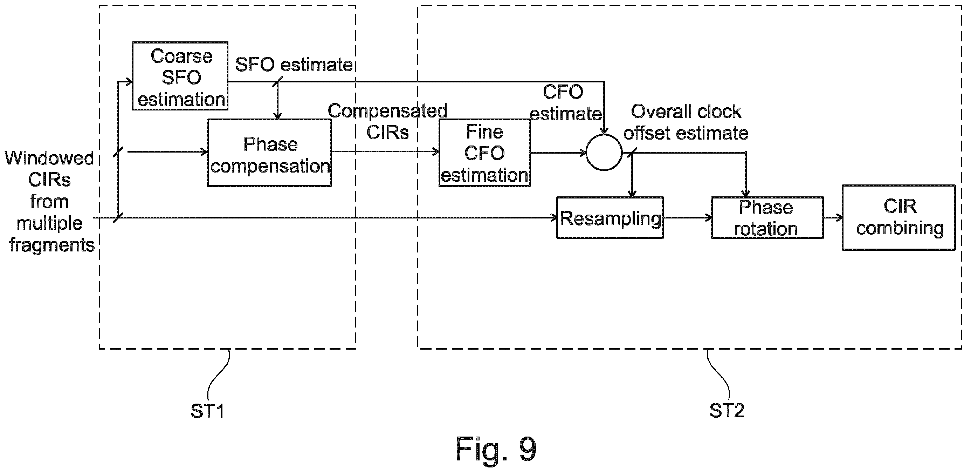

FIG. 9 is a block diagram for the two-step timing frequency estimation algorithm, representing the flow of FIG. 6. One recognizes the above-mentioned first and second stages ST1, ST2 as having been explained in more detail above with respect to the flow diagram of FIG. 6. The terms "resampling" and "phase rotation" of the second stage ST2 can be seen as a compensation process.

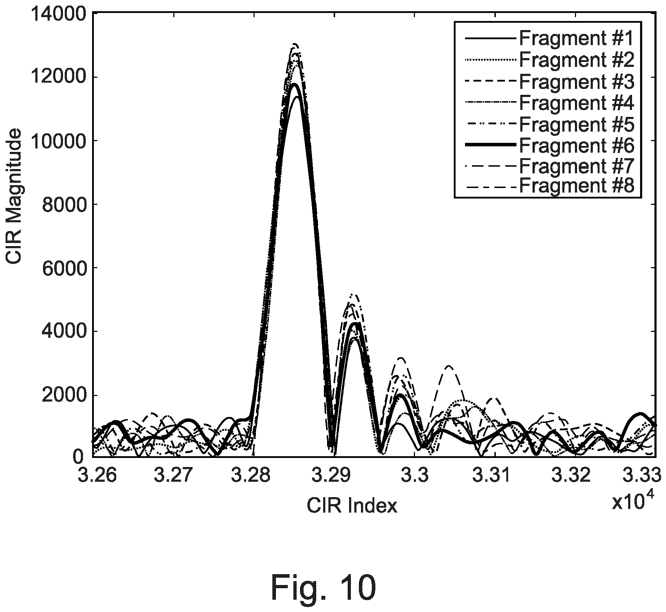

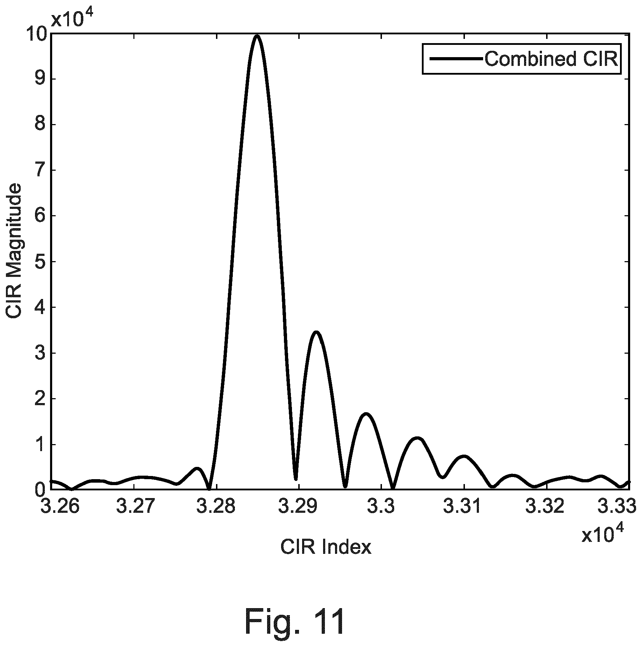

The resulting CIRs are shown in FIG. 10 and the resulting combined CIRs are shown in FIG. 11. In comparison with FIG. 4, it can be seen that a well-defined single peak between CIR indices 3.28 and 3.29. The indices are related to an order of an output as a result of cross-correlation.

The proposed method has been illustrated exemplary as a two-way MMS ranging process between UWB devices. Needless to say, that the proposed method also can be implemented in the context of one-way ranging or other procedures of MMS ranging between UWB devices. Also, all given numerical values hereinbefore are to be understood as exemplary.

As another example, where the specification may make reference to a "first" type of structure, a "second" type of structure, where the adjectives "first" and "second" are not used to connote any description of the structure or to provide any substantive meaning; rather, such adjectives are merely used for English-language antecedence to differentiate one such similarly-named structure from another similarly-named structure.

Based upon the above discussion and illustrations, those skilled in the art will readily recognize that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps.

It should be noted that the term "comprising" does not exclude other elements or steps and "a" or "an" does not exclude a plurality. Also, elements described in association with different embodiments may be combined. It should also be noted, that reference signs in the claims should not be construed as limiting the scope of the claims.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code, or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example, but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject matter also any combination of features relating to different subject-matters, in particular a combination of features of the method-type claims and features of the apparatus-type claims, is considered to be disclosed with this document.

Reference signs:

| 10 | 1st UWB device |
| 20 | 2nd UWB device |
| 100..107 | method steps |
| B1...Bn | branch |
| CO | clock offset |
| CFO | carrier frequency offset |
| SFO | sampling frequency offset |
| RF1... RFn | MMS ranging fragments |
| RP | non-MMS ranging frame |
| ST1, ST2 | stages |

## Claims

1. A method of compensating a clock offset (CO) between UWB devices (10, 20) in an MMS ranging process, comprising the steps:

7

a) determining CIR fragments as a result of ranging fragments (RF1...RFn) of the MMS ranging process;

b) applying a specified interpolation to the CIR fragments;

c) determining a sampling frequency offset, SFO between a first UWB device (10) and a second UWB device (20) out of the interpolated CIR fragments;

d) compensating a carrier frequency offset, CFO by means of the determined sampling frequency offset, SFO;

e) determining a residual estimation of the carrier frequency offset, CFO;

f) determining the clock offset (CO) by means of the estimated sampling frequency offset, SFO and the carrier frequency offset, CFO;

g) compensating the clock offset to obtain fine CIR fragments; and

h) combining the CIR fragments to channel impulse responses, CIRs.

2. The method according to claim 1, wherein in step b) a linear relationship between CIR peak locations is used to estimate the sampling frequency offset, SFO.

3. The method according to claim 1 or 2, wherein the sampling frequency offset, SFO is related to the peaks of the channel impulse responses, CIRs.

4. The method according to any of the preceding claims, wherein the sampling frequency offset, SFO is determined from up-sampled channel impulse responses, CIRs.

5. The method according to claim 4, wherein the estimated sampling frequency offset, SFO is obtained by the following equation:

$$f_{\{SFOest,\ ppm\}} = slope(CIR\ peak\ locations)/L$$

where L is the interpolation factor.

6. The method according to claim 5, wherein a slope of the channel impulse response, CIR peak locations is determined by linear regression or differential approach.

7. The method according to claim 5 or 6, wherein in a case, that one peak location of a CIR fragment is specified far away from a peak location of another CIR fragment, it is removed from the slope calculation.

8. The method according to any of the preceding claims, wherein in step e) the residual carrier frequency offset, CFO is estimated with the compensated CIR peaks, wherein phase unwrapping and differentiation approach is used.

9. The method according to any of the preceding claims, wherein in step f) the overall clock offset (CO) is determined as a sum of the estimated sampling frequency offset, SFO and the estimated carrier frequency offset, CFO.

10. A UWB device (10, 20) configured to perform the method of any of the preceding claims.

11. A computer-implemented method comprising executable instructions which, when executed by a UWB device (10, 20) cause said UWB device (10, 20) to carry out the method of claims 1 to 9.

Fig. 1

Fig. 2

Fig. 3

Fig. 4

Fig. 5

Fig. 6

Fig. 7

CIR Fragment Index

Fig. 8

EP 4 651 390 A1

Fig. 9

EP 4 651 390 A1

Fig. 10

**Fig. 11**

Europäisches
Patentamt
European
Patent Office
Office européen
des brevets

# EUROPEAN SEARCH REPORT

**Application Number**

EP 24 17 5963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2022/137177 A1 (HAMMERSCHMIDT JOACHIM S [US] ET AL) 5 May 2022 (2022-05-05) * paragraphs [0057], [0061] - [0066], [0088] - [0091]; figure 7 * | 1-11 | INV. H04B1/7163 H04B1/7183 G01S11/02 H04L25/02 |
| A | US 10 826 727 B1 (ZHOU JUN [US] ET AL) 3 November 2020 (2020-11-03) * column 5, line 64 - column 6, line 67 * | 1-11 | |
| A | SHEIKH ALIREZA ET AL: "Accurate and Efficient Range Estimation for IEEE 802.15.4z-Compliant UWB System", 2024 IEEE WIRELESS COMMUNICATIONS AND NETWORKING CONFERENCE (WCNC), IEEE, 21 April 2024 (2024-04-21), pages 1-6, XP034631131, DOI: 10.1109/WCNC57260.2024.10571196 [retrieved on 2024-07-03] * page 1, paragraph I. Introduction * * page 2, paragraph III. System model - page 3; figure 3 * | 1-11 | |
| A | JAREK NIEWCZAS (QORVO): "Multi-millisecond Ranging and Data transmission", IEEE DRAFT; 15-22-0283-00-04AB-MULTI-MILLISECOND-RANGING-AND-DATA-TRANSMISSION, IEEE-SA MENTOR, PISCATAWAY, NJ USA , vol. 802.15.4ab 16 May 2022 (2022-05-16), pages 1-9, XP068190665, Retrieved from the Internet: URL:https://mentor.ieee.org/802.15/dcn/22/15-22-0283-00-04ab-multi-millisecond-ranging-and-data-transmission.pptx [retrieved on 2022-05-16] * pages 3-4, 7 * | 1-11 | TECHNICAL FIELDS SEARCHED (IPC) H04B G01S H04L |

The present search report has been drawn up for all claims

| Place of search | Date of completion of the search | Examiner |
|---|---|---|
| Munich | 30 October 2024 | Giglietto, Massimo |

EPO FORM 1503 03.82 (P04C01)

## ANNEX TO THE EUROPEAN SEARCH REPORT
## ON EUROPEAN PATENT APPLICATION NO.

EP 24 17 5963

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2024

| Patent document cited in search report | | Publication date | Patent family member(s) | | Publication date |
|---|---|---|---|---|---|
| US 2022137177 | A1 | 05-05-2022 | US | 2022137177 A1 | 05-05-2022 |
| | | | US | 2024045017 A1 | 08-02-2024 |
| US 10826727 | B1 | 03-11-2020 | EP | 3799318 A1 | 31-03-2021 |
| | | | US | 10826727 B1 | 03-11-2020 |

EPO FORM P0459

For more details about this annex : see Official Journal of the European Patent Office, No. 12/82

**REFERENCES CITED IN THE DESCRIPTION**

**Patent documents cited in the description**

- US 20220137177 A1
- US 8085876 B2